# FASCICULE DE BREVET EUROPEEN

(11) **EP 3 625 380 B1**
(45) Date de publication et mention de la délivrance du brevet: **24.02.2021**
(21) Numéro de dépôt: 18735633.2
(22) Date de dépôt: 16.05.2018
(51) Int. Cl.: C25D 3/50, C25D 21/18, C25D 21/22

(54) **PROCÉDÉ ET DISPOSITIF AMÉLIORÉS DE FILTRATION DE BAIN DE PLATINE PAR ÉLECTRODIALYSE**
VERBESSERTES VERFAHREN UND VORRICHTUNG ZUM FILTRIEREN EINES PLATINBADS DURCH ELEKTRODIALYSE
IMPROVED METHOD AND DEVICE FOR FILTERING A PLATINUM BATH BY ELECTRODIALYSIS

(30) Priorité: 16.05.2017 FR 1754283
(43) Date de publication de la demande: 25.03.2020
(73) Titulaire: Safran Aircraft Engines, 75015 Paris (FR); Centre National de la Recherche Scientifique, 75016 Paris (FR); Université Paul Sabatier Toulouse III, 31062 Toulouse Cedex 9 (FR)
(72) Inventeur: GENGO, Auriane, 77550 Moissy-Cramayel (FR); GALIER, Sylvain, 31570 Saint Pierre De Lages (FR); ROUX - DE BALMANN, Hélène, 31120 Roquettes (FR)
(74) Mandataire: Cabinet Beau de Loménie
(86) Numéro de dépôt international: PCT/FR2018/051178
(87) Numéro de publication internationale: WO 2018/211215

(56) Documents cités:
- JP-A- 2008 279 417
- US-A- 5 419 821
- US-A1- 2003 150 736
- US-A1- 2005 241 942
- US-A1- 2006 266 654

## Description

### DOMAINE DE L'INVENTION

Le présent exposé concerne le domaine des bains de platine pour la réalisation de sous-couche métallique à base de platine sur un substrat métallique, plus particulièrement un procédé de filtration d'éléments du bain de platine par électrodialyse, ainsi qu'un dispositif de filtration du bain de platine.

### ETAT DE LA TECHNIQUE ANTERIEURE

Les pièces d'aubages de turbine de turbomachine en superalliage peuvent être revêtues d'une sous-couche métallique assurant la protection à l'oxydation/corrosion du matériau. Les pièces d'aubages peuvent également comprendre une couche céramique jouant le rôle de barrière thermique. La sous-couche métallique permet alors un meilleur accrochage de la couche céramique sur la pièce d'aubage. Cette sous-couche métallique est réalisée notamment par un dépôt électrolytique de platine provenant d'un bain de platine. Un procédé de fabrication d'un tel bain, pour la réalisation d'une sous-couche métallique à base de platine, est par exemple décrit dans le brevet FR2989694.

L'utilisation des bains de platine est aujourd'hui relativement bien maîtrisée. Pour former une sous-couche métallique, le bain de platine comprend un ou des complexes de platine qui, sous l'effet du courant électrique parcourant le bain, se déposent sur la pièce métallique pour former la sous-couche métallique.

Ainsi, au fil des dépôts de sous-couche de platine sur les pièces métalliques, la teneur en complexe de platine dans le bain de platine, ainsi que le pH du bain de platine, tendent à diminuer. Par conséquent, la concentration en platine sous forme complexée dans le bain n'est pas constante au cours du temps. La vitesse et le temps de dépôt ne sont donc également pas constants. Il est donc nécessaire soit de remplacer, soit de régénérer le bain de platine.

Au vu du coût des composés du bain, notamment du platine, on favorise généralement la régénération du bain de platine Un procédé de régénération de bain est décrit par exemple dans le document US5419821.

Ainsi, lorsque la teneur totale en platine du bain atteint une limite inférieure prédéterminée, on arrête le dépôt électrolytique de platine sur les pièces métalliques et on régénère le bain de platine.

Typiquement, cette régénération du bain de platine est réalisée par ajout direct de sels de platine dans le bain ou par réaction intensifiée. L'ajout de soude est également nécessaire afin de conserver un pH du bain de platine sensiblement constant.

Par ailleurs, outre le platine proprement dit, le bain de platine comporte également des ions Cl⁻, Na⁺ et NO₃⁻. Au fil des dépôts de sous-couches de platine sur les pièces métalliques, et donc au fil des régénérations du bain de platine et des ajouts de soude, la teneur de ces éléments dans le bain de platine augmente. Au-delà d'un certain seuil, la présence de ces éléments dans le bain de platine agit comme un « polluant », pouvant nuire à son bon fonctionnement. En effet, une concentration trop élevée de ces éléments dans le bain de platine peut perturber le processus de dépôt de platine. Il faut donc remplacer le bain de platine, ou limiter leur concentration dans le bain. Au vu du coût des composés du bain, notamment du platine, le remplacement du bain de platine n'est pas la solution privilégiée.

Il existe donc un besoin pour garantir la qualité du dépôt de platine, sans altérer les propriétés du bain, et ainsi de prolonger la durée de vie de celui-ci.

### PRESENTATION DE L'INVENTION

Le présent exposé concerne un procédé de filtration du bain de platine par électrodialyse tel que défini dans la revendication 1, le procédé comprenant des étapes successives de :
- soutirage de fluide dans le bain de platine par l'intermédiaire d'un courant de soutirage ;
- filtration du fluide soutiré à l'étape de soutirage, s'effectuant par électrodialyse dans un dispositif de filtration comportant un réacteur d'électrodialyse ;
- alimentation du bain de platine avec le fluide issu de l'étape de filtration, par l'intermédiaire d'un courant de bain filtré; l'ensemble de ces étapes étant réalisé en flux continu.

Dans le présent exposé, l'ensemble composé du bain de platine, du courant de soutirage, du réacteur d'électrodialyse et du courant de bain filtré forme une boucle de circulation dans laquelle circule un fluide. On désigne par « fluide » le liquide s'écoulant dans ladite boucle, que ce soit dans le bain de platine, dans le courant de soutirage avant filtration ou dans le courant de bain filtré.

Dans le présent exposé, le courant de soutirage désigne le fluide prélevé dans le bain de platine, et circulant vers le dispositif de filtration dans un tuyau, par exemple. Le courant de bain filtré désigne le fluide provenant du dispositif de filtration après l'étape de filtration, et circulant vers le bain de platine dans un tuyau, par exemple.

Par « réalisé en flux continu », on comprend que ces étapes (soutirage, filtration, alimentation), constituant un cycle de filtration, sont réalisées successivement de sorte que le fluide (courant de soutirage, courant de bain filtré) s'écoule de manière continue, sans interruption, notamment lorsqu'il passe dans le dispositif de filtration au cours de l'étape de filtration.

On comprend donc que le procédé de filtration peut être réalisé lorsqu'un processus de dépôt de sous-couche de platine est en cours ou non.

Le procédé de filtration peut être également réalisé de manière discontinue. On peut donc, par exemple, interrompre le procédé de filtration lorsqu'aucun processus de dépôt de sous-couche de platine est en cours, c'est-à-dire qu'en fonction des besoins de filtration du bain de platine, on peut arrêter le procédé de filtration, ou interrompre le procédé de filtration lorsque le processus de dépôt de sous-couche de platine est en cours. On comprend que le procédé de filtration peut être réalisé indépendamment de la réalisation du processus de dépôt de sous-couche de platine.

Ce procédé est possible du fait que l'étape de filtration, qui permet la filtration du bain de platine, s'effectue dans un dispositif spécifique, et plus précisément dans un réacteur d'électrodialyse qui un élément distinct dudit bain de platine et externe à celui-ci. Cela permet de ne pas interrompre la production, c'est-à-dire le procédé de dépôt de sous-couche de platine, pour filtrer le bain de platine. Cela permet ainsi de conserver la concentration de ces éléments à une valeur sensiblement constante, donc garantir la qualité du dépôt de platine, sans altérer les propriétés du bain, et ainsi de prolonger la durée de vie de celui-ci.

Dans certains modes de réalisation, le dispositif de filtration comporte en outre un courant de filtration et un courant d'électrodes, le fluide soutiré dans le bain de platine, le courant de filtration et le courant d'électrodes circulant séparément dans le réacteur d'électrodialyse, l'étape de filtration par électrodialyse s'effectuant dans le réacteur d'électrodialyse.

On comprend ainsi que trois courants circulent séparément dans le réacteur d'électrodialyse : le courant de soutirage à filtrer, provenant du bain de platine, le courant de filtration permettant la récupération des éléments à filtrer, et dont la concentration en éléments à filtrer augmente au cours de l'étape de filtration dans le réacteur d'électrodialyse, et le courant d'électrodes s'écoulant le long d'électrodes que comporte le réacteur d'électrodialyse, et permettant la réaction aux électrodes. Par « séparément », on comprend qu'aucun courant ne peut se mélanger à un des deux autres courants. Ces courants peuvent par exemple être séparés par des membranes que comporte le réacteur d'électrodialyse. Ces membranes sont des membranes anioniques et cationiques laissant passer respectivement les anions et les cations présents dans les courants qui circulent dans le réacteur d'électrodialyse. La concentration en éléments à filtrer du bain de platine peut ainsi être diminuée sans altérer les propriétés du bain.

Dans certains modes de réalisation, le débit d'alimentation du réacteur par le courant de soutirage et d'alimentation du réacteur par le circuit de filtration est compris entre 150 L/hrs (Litre/heure) et 250 L/hrs, de préférence entre 165 L/hrs et 225 L/hrs, de préférence encore entre 180 L/hrs et 210 L/hrs.

Dans certains modes de réalisation, la température du courant de soutirage dans le réacteur d'électrodialyse est comprise entre 40 et 65°C, de préférence égale à 64°C.

Dans certains modes de réalisation, le bain de platine comporte des ions Cl⁻, la concentration en ions Cl⁻ dans le bain de platine étant maintenue continûment à une valeur comprise dans un intervalle de 0 à 200 g/l.

Dans certains modes de réalisation, le bain de platine comporte des ions Na⁺, la concentration en ions Na⁺ dans le bain de platine étant maintenue continûment à une valeur comprise dans un intervalle de 0 g/l à 200 g/l.

Dans certains modes de réalisation, le bain de platine comporte des ions NO₃⁻, la concentration en ions NO₃⁻ dans le bain de platine étant maintenue continûment à une valeur de 0g/l.

Dans le présent exposé, les éléments à filtrer du bain de platine peuvent comporter des ions des ions Cl⁻, des ions Na⁺ et des ions NO₃⁻. Le procédé permet de maintenir la concentration du bain de platine en éléments à filtrer dans ces plages de valeurs. Ces dernières sont suffisamment basses pour ne pas nuire au bon fonctionnement du bain de platine et particulièrement au processus de dépôts de sous-couches de platine sur les pièces métalliques. La concentration en NO₃⁻ atteint cependant jamais des valeurs pouvant nuire à la qualité de dépôt de platine.

Dans certains modes de réalisation, le pH du bain de platine est maintenu continûment à une valeur comprise dans un intervalle de 6,10 à 6,3, de préférence égal à 6,20.

Cette valeur de pH du bain de platine permet d'optimiser le dépôt de sous-couche de platine. Elle peut être maintenue à cette valeur par ajout de soude dans le bain de platine par exemple.

L'étape de filtration est mise en œuvre lorsque la concentration en ions Cl⁻ dans le bain de platine est supérieure ou égale à une première valeur seuil prédéterminée, ou la concentration en ions Na⁺ dans le bain de platine est supérieure ou égale à une deuxième valeur seuil prédéterminée.

La valeur prédéterminée de la concentration en ions Cl⁻ dans le bain de platine peut être par exemple de 11 g/L, ou la valeur prédéterminée de la concentration en ions Na⁺ dans le bain de platine peut être par exemple de 32 g/L. Le procédé de dépollution, c'est-à-dire la mise en circulation des différents courants dans le réacteur d'électrodialyse, peut ainsi être mis en œuvre lorsqu'au moins une de ces valeurs prédéterminées est atteinte.

Dans certains modes de réalisation, l'étape de filtration est mise en œuvre lorsque le pH du bain de platine augmente d'une valeur prédéterminée.

La valeur prédéterminée peut être égale à 0,10. En effet, au fil des dépôts de sous-couche de platine, le pH du bain de platine tend à diminuer. Pour maintenir ce pH à une valeur sensiblement constante, par exemple 6,20, l'ajout de soude, engendrant une augmentation de la concentration en ions Na⁺, est nécessaire. L'étape de filtration peut donc être mise en œuvre lorsque le pH du bain de platine augmente d'une valeur de 0,10, par exemple, permettant de passer d'un pH de 6,10 à 6,20 dans le bain de platine. Ce critère de détection, permettant de mettre en œuvre le procédé de filtration lorsque le pH du bain de platine augmente d'une valeur prédéterminée, permet de s'affranchir d'une analyse des concentrations des différents ions que comporte le bain de platine, et donc de simplifier le procédé filtration.

Dans certains modes de réalisation, l'étape de filtration est mise en œuvre lorsqu'au moins une régénération du bain de platine a été effectuée.

Par régénération du bain de platine, on comprend le processus permettant de conserver la concentration en platine sous forme complexée dans le bain de platine à une valeur sensiblement constante. La régénération peut s'effectuer par ajout de sel de platine directement dans le bain de platine, ou par utilisation d'un réacteur intensifié par exemple. Ces régénérations du bain de platine engendrent une augmentation de la concentration en ions Cl⁻. La mise en œuvre de l'étape de filtration, après qu'au moins une régénération du bain de platine ait été effectuée, permet donc de diminuer la concentration en ions Cl⁻ dans le bain de platine.

Dans certains modes de réalisation, le courant d'électrodes comporte une concentration en Na₂SO₄ comprise entre 9,0 g/L et 11,0 g/L, de préférence entre 9,5 g/L et 10,5 g/L, de préférence encore 10,0 g/L.

Dans certains modes de réalisation, le courant de filtration est de l'eau, dont la concentration en ions Cl⁻ et Na⁺ issus du courant de soutirage augmente au cours de l'étape de filtration dans le réacteur d'électrodialyse.

Le présent exposé concerne également un dispositif de filtration de bain de platine par électrodialyse tel que défini dans la revendication 9, comportant de filtration du bain de platine par électrodialyse, comportant :
- un bain de platine ;
- un bain de filtration et un bain d'électrodes ;
- un réacteur d'électrodialyse alimenté par un courant de soutirage issu du bain de platine, par un courant de filtration issu du bain de filtration et par un courant d'électrodes issu du bain d'électrodes ;
- un courant de bain filtré issu du réacteur, et alimentant le bain de platine.

Le bain de filtration comporte un fluide pouvant être de l'eau, circulant jusqu'au réacteur d'électrodialyse par l'intermédiaire du courant de filtration. Le bain d'électrodes comporte un fluide permettant la réaction aux électrodes dans le réacteur d'électrodialyse. Ce fluide peut comporter du Na₂SO₄, et circule jusqu'au réacteur d'électrodialyse par l'intermédiaire du courant d'électrodes.

### BREVE DESCRIPTION DES DESSINS

L'invention et ses avantages seront mieux compris à la lecture de la description détaillée faite ci-après de différents modes de réalisation de l'invention donnés à titre d'exemples non limitatifs. Cette description fait référence aux pages de figures annexées, sur lesquelles :
- la figure 1 représente un schéma fonctionnel d'un dispositif de filtration de bain de platine selon le présent exposé ;
- la figure 2 représente un schéma de principe détaillé du réacteur d'électrodialyse de la figure 1.

### DESCRIPTION DETAILLEE D'EXEMPLES DE REALISATION

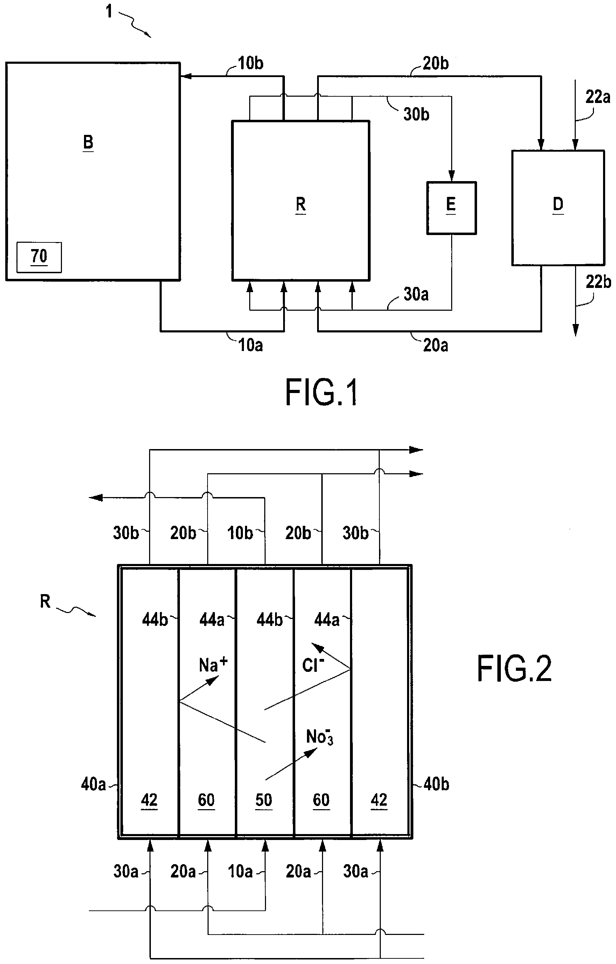

La figure 1 est un schéma fonctionnel d'un dispositif 1 de filtration de bain de platine selon le présent exposé. Le dispositif 1 comporte un bain de platine B rempli au moins en partie par un fluide comportant un ou des complexes de platine permettant de former une sous-couche métallique. Sous l'effet du courant électrique parcourant le bain, les complexes de platine se déposent sur la pièce métallique, par exemple une pièce d'aubage de turbomachine, pour former la sous-couche métallique.

Par exemple, pour fabriquer un litre de bain de platine B à 8g/litre de platine, on procède de la façon suivante :
- préparation d'une solution B' : dans 300 ml d'eau distillée (< 500 Ω) à 30°C, mettre 44,0 g de diammonium hydrogénophosphate de formule chimique (NH₄)₂HPO₄ (soit 0,33 mole) et 75,0 g d'ammonium dihydrogénophosphate de formule chimique NH₄H₂PO₄ (soit 0,65 mole). Le ratio molaire entre la quantité d'ammonium dihydrogénophosphate et la quantité de diammonium hydrogénophosphate est de 2. Une fois les sels dissous, couvrir la solution et la porter à 50°C pendant 4hrs30.
- Préparation d'une solution A' : dans 300 ml d'eau distillée à 45°C, mettre 5g de soude de formule chimique NaOH (soit 0,080 mole) et 18,3 g de sel de platine hexachloroplatinate de diammonium de formule (NH₄)₂PtCl₆ (soit 0,040 mole). Le ratio molaire entre la quantité de soude et de sel d'hexachloroplatinate de diammonium est de 2. Laisser dissoudre les sels de platine au sein de la solution A' ;
- Une fois la solution B' prête et chaude, la solution A est préparée et est ajoutée dans la solution B' préalablement portée à 60°C.
- Pour finir, le mélange A'+B' (dont le pH est au préalable ajusté à 6.3 par ajout d'une solution basique telle que, par exemple, de la soude, de la potasse, du triphosphate de sodium) est portée à 85°C pendant 3 hrs. Toutes les solutions sont couvertes pendant les étapes de chauffe.
- Plus généralement avec cette solution B' comportant du diammonium hydrogénophosphate de formule chimique (NH₄)₂HPO₄ et de l'ammonium dihydrogénophosphate de formule chimique NH₄H₂PO₄, on fixe le pH du mélange de solutions A'+B' entre 6 et 10 et de préférence entre 6 et 7.

Le dispositif 1 comprend également un courant de soutirage 10a circulant dans un premier tuyau, un courant de filtration 20a circulant dans un deuxième tuyau, et un réacteur d'électrodialyse R. Le bain de platine B et le réacteur d'électrodialyse R sont reliés entre eux par le courant de soutirage 10a. Le courant de soutirage 10a prélève une partie du bain de platine B à filtrer et l'achemine jusqu'au réacteur d'électrodialyse R. Un courant de bain filtré 10b circule dans un troisième tuyau, et relie le réacteur d'électrodialyse R et le bain de platine B. Le fluide filtré, issu du réacteur d'électrodialyse R, est alors acheminé jusqu'au bain de platine B par l'intermédiaire du courant de bain filtré 10b.

L'ensemble formé du bain de platine B, du courant de soutirage 10a, du réacteur d'électrodialyse R et du courant de bain filtré 10b forme une boucle de circulation du bain de platine, passant d'un état « bain à filtrer », dans le courant de soutirage 10a, à un état « bain filtré », dans le courant de bain filtré 10b.

En outre, le bain de platine B peut comporter des moyens de mesure de concentration 70 permettant de mesurer de manière continue la concentration en éléments à filtrer dans le bain de platine B. Les éléments à filtrer peuvent être des ions Cl⁻, Na⁺ et NO₃⁻.

Un bain de filtration D est relié au réacteur d'électrodialyse R par le courant de solution de filtration 20a. Le bain de filtration D comporte un fluide pouvant être par exemple de l'eau du réseau public. Le courant de filtration 20a prélève une partie du fluide contenu dans le bain de filtration D et l'achemine jusqu'au réacteur d'électrodialyse R puis, après son passage dans le réacteur d'électrodialyse, le fluide retourne au bain de filtration D par l'intermédiaire d'un courant retour de filtration 20b.

Un bain d'électrodes E est relié au réacteur d'électrodialyse R par le courant d'électrodes 30a. Le bain d'électrodes E comporte un fluide pouvant présenter une concentration en Na₂SO₄ comprise entre 9 g/L et 11 g/L, de préférence entre 9,5 g/L et 10,5 g/L, de préférence encore 10,0 g/L. Le courant d'électrodes 30a prélève une partie du fluide contenu dans le bain d'électrodes E et l'achemine jusqu'au réacteur d'électrodialyse R puis, après son passage dans le réacteur d'électrodialyse R, le fluide retourne au bain d'électrode E par l'intermédiaire d'un courant retour d'électrodes 30b.

Les trois fluides contenus respectivement dans le bain de platine B, le bain de filtration D et le bain d'électrodes E circulent séparément dans le réacteur d'électrodialyse R. Pour ce faire, le réacteur R comporte plusieurs compartiments séparés par des membranes cationiques 44a et anioniques 44b parallèles entre elles, entre lesquelles circulent les différents fluides, sans que ces derniers puissent se mélanger entre eux. Plus spécifiquement, comme illustré schématiquement sur la figure 2, le réacteur R comporte au moins un premier compartiment 50 dans lequel circule le courant de soutirage, au moins un deuxième compartiment 60 dans lequel circule le courant de filtration 20a, et deux compartiments 42 disposés de part et d'autre des compartiments 50 et 60, dans lesquels circule le courant d'électrodes 30a. Le réacteur R comporte en outre deux électrodes : une cathode 40a et une anode 40b, disposées de part et d'autre du réacteur, le long desquelles circule le courant d'électrodes 30a. Les électrodes, ainsi que le courant d'électrodes 30a, permettent la réaction aux électrodes, de sorte que, lors de leur passage dans les premier et deuxième compartiments 50, 60 respectivement, les ions Cl⁻, Na⁺ et NO₃⁻ contenus dans le courant de soutirage 10a migrent à travers les membranes anioniques 44b et cationiques 44a dans le courant de filtration 20a. Plus précisément, les ions Cl⁻ contenus dans le courant de soutirage 10a, traversent la membrane anionique 44b pour migrer dans le courant de filtration 20a, et sont ensuite retenus dans ledit courant de filtration 20a en étant bloqués par la membrane cationique 44a. De la même manière, les ions Na⁺ contenus dans le courant de soutirage 10a, traversent la membrane cationique 44a pour migrer dans le courant de filtration 20a, et sont ensuite retenus dans ledit courant de filtration 20a en étant bloqués par la membrane anionique 44b.

Le bain de filtration D peut comporter en outre un courant d'alimentation en eau 22a, alimentant le bain de filtration D, et un courant de soutirage d'eau 22b, soutirant une partie de l'eau contenu dans le bain de filtration D. En effet, au fil des étapes de filtration dans le réacteur d'électrodialyse R, l'eau provenant du bain de filtration D se charge en éléments à filtrer, notamment en ions Cl⁻, Na⁺ et NO₃⁻ issus du bain à filtrer. L'eau perdant petit à petit sa capacité à se concentrer en ces éléments à filtrer, le processus de filtration perd donc de son efficacité au cours du temps. Le courant d'alimentation en eau 22a et le courant de soutirage d'eau 22b permettent donc de renouveler de manière continue le contenu du bain de filtration D. Par « continu », on comprend que ce renouvellement peut être effectué qu'un processus de filtration dans le réacteur R soit en cours ou non. Alternativement au courant d'alimentation en eau 22a et au courant de soutirage d'eau 22b, le contenu du bain de filtration D peut être changé lorsque la concentration en Cl⁻ atteint une valeur comprise entre 8,0 et 10,0 g/L.

Le procédé de filtration peut être mis en œuvre lorsque les moyens de mesure de concentration 70 détectent que l'une ou l'autre des concentrations en Cl⁻ ou Na⁺ excède une valeur seuil prédéterminée. La valeur seuil prédéterminée de la concentration en ions Cl⁻ dans le bain de platine peut être par exemple de 11 g/L, et la valeur prédéterminée de la concentration en ions Na⁺ dans le bain de platine peut être par exemple de 32 g/L.

Le procédé de filtration peut également être mis en œuvre lorsque des moyens de mesure de pH (non représentés) détectent que le pH du bain de platine augmente d'une valeur prédéterminée. En effet, au cours des processus de dépôt de sous-couche de platine, le pH du bain de platine tend à diminuer. Pour maintenir ce pH à une valeur cible, par exemple 6,20, il est nécessaire d'ajouter de la soude dans le bain. Cet ajout engendre l'augmentation en ions Na⁺ dans le bain. La valeur prédéterminée d'augmentation du pH du bain de platine est une valeur permettant de revenir à la valeur cible. Cette valeur prédéterminée peut être par exemple de 0,10, permettant de passer d'un pH de 6,10 à 6,20. Ainsi, la détection d'une augmentation du pH de 0,10 caractérise un ajout de soude et donc une augmentation de la concentration en ions Na⁺ dans le bain, et ainsi la nécessité de mettre en œuvre le procédé de filtration.

Le procédé de filtration est également mis en œuvre lorsqu'au moins une régénération du bain de platine a été effectuée. En effet, le processus de régénération engendre une augmentation en ions Cl⁻ dans le bain de platine. Ainsi, le procédé de filtration est mis en œuvre lorsque le pH du bain de platine augmente de la valeur prédéterminée, et qu'un processus de régénération du bain de platine a été effectué.

Les différents courants (courant de soutirage, courant de filtration et courant d'électrodes) sont alors mis en circulation par l'intermédiaire de pompes (non représentées). Les éléments à filtrer (ions Cl⁻ et Na⁺) contenus dans le courant de soutirage 10a sont alors transférés en partie dans le courant de filtration 20b, grâce au courant électrique traversant le réacteur d'électrodialyse R. Le courant de bain filtré 10b, présentant une concentration en éléments à filtrer plus faible que celle du courant de soutirage, est alors réalimenté dans le bain de platine B. Cette opération de filtration peut être réalisée même lorsqu'un processus de dépôt de sous-couche de platine est en cours.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

Il est également évident que toutes les caractéristiques décrites en référence à un procédé sont transposables, seules ou en combinaison, à un dispositif, et inversement, toutes les caractéristiques décrites en référence à un dispositif sont transposables, seules ou en combinaison, à un procédé.

## Revendications

1. Procédé de filtration de bain de platine par électrodialyse, le bain de platine (B) comportant des ions Cl⁻ et des ions Na⁺, le procédé comprenant des étapes successives de :
- soutirage de fluide dans le bain de platine (B) par l'intermédiaire d'un courant de soutirage (10a) ;
- filtration du fluide soutiré à l'étape de soutirage, s'effectuant par électrodialyse dans un dispositif de filtration (1) comportant un réacteur d'électrodialyse (R) ;
- alimentation du bain de platine (B) avec le fluide issu de l'étape de filtration, par l'intermédiaire d'un courant de bain filtré (10b) ;
l'ensemble de ces étapes étant réalisé en flux continu, et l'étape de filtration étant mise en œuvre lorsque la concentration en ions Cl⁻ dans le bain de platine (B) est supérieure ou égale à une première valeur seuil prédéterminée, ou la concentration en ions Na⁺ dans le bain de platine (B) est supérieure ou égale à une deuxième valeur seuil prédéterminée.

2. Procédé selon la revendication 1, dans lequel le dispositif de filtration (1) comporte en outre un courant de filtration (20a) et un courant d'électrodes (30a), le fluide soutiré dans le bain de platine (B), le courant de filtration (20a) et le courant d'électrodes (30a) circulant séparément dans le réacteur d'électrodialyse (R), l'étape de filtration par électrodialyse s'effectuant dans le réacteur d'électrodialyse (R).

3. Procédé selon la revendication 1 ou 2, dans lequel la température du courant de soutirage (10a) dans le réacteur d'électrodialyse (R) est comprise entre 40 et 65°C de préférence égale à 64°C.

4. Procédé selon l'une quelconque des revendications 1 à 3, dans lequel la concentration en ions Cl⁻ dans le bain de platine (B) est maintenue continûment à une valeur comprise dans un intervalle de 0 à 200 g/l.

5. Procédé selon l'une quelconque des revendications 1 à 4, dans lequel la concentration en ions Na⁺ dans le bain de platine (B) est maintenue continûment à une valeur comprise dans un intervalle de 0 à 200 g/L.

6. Procédé selon l'une quelconque des revendications 1 à 5, dans lequel le pH du bain de platine (B) est maintenu continûment à une valeur comprise dans un intervalle de 6,10 à 6,30, de préférence égal à 6,20.

7. Procédé selon l'une quelconque des revendications 1 à 6, dans lequel l'étape de filtration est mise en œuvre lorsque le pH du bain de platine (B) augmente d'une valeur prédéterminée.

8. Procédé selon l'une quelconque des revendications 1 à 7, dans lequel l'étape de filtration est mise en œuvre lorsqu'au moins une régénération du bain de platine (B) a été effectuée.

9. Dispositif de filtration (1) de bain de platine par électrodialyse, comportant :
- Un bain de platine (B) comportant des ions Cl⁻ et des ions Na⁺ et des moyens de mesure de concentration (70) permettant de mesurer de manière continue la concentration ions Cl⁻ et en ions Na⁺, le dispositif de filtration (1) étant configuré pour être mis en œuvre lorsque les moyens de mesure de concentration (70) détectent que l'une ou l'autre des concentrations en Cl⁻ ou Na⁺ excède une valeur seuil prédéterminée;
- Un bain de filtration (D) et un bain d'électrode (E) ;
- Un réacteur d'électrodialyse (R) alimenté par un courant de soutirage (10a) issu du bain de platine (B), par un courant de filtration (20a) issu du bain de filtration (D) et par un courant d'électrodes (30a) issu du bain d'électrodes (E);
- Un courant de bain filtré (10b) issu du réacteur (R), et alimentant le bain de platine (B).

## Patentansprüche

1. Verfahren zum Filtrieren eines Platinbads durch Elektrodialyse, wobei das Platinbad (B) Cl⁻-Ionen und Na⁺-Ionen aufweist, wobei das Verfahren folgende aufeinanderfolgende Schritte aufweist:
- Entnehmen von Fluid aus dem Platinbad (B) mittels eines Entnahmestroms (10a);
- Filtrieren des beim Entnahmeschritt entnommenen Fluids, das durch Elektrodialyse in einer Filtriervorrichtung (1) durchgeführt wird, die einen Elektrodialysereaktor (R) aufweist;
- Speisen des Platinbads (B) mit dem Fluid, das aus dem Filtrierschritt hervorgegangen ist, mittels eines Stroms gefilterten Bades (10b);
wobei die Gesamtheit dieser Schritte im kontinuierlichen Strom durchgeführt wird und der Filtrierschritt durchgeführt wird, wenn die Konzentration an Cl⁻-Ionen in dem Platinbad (B) größer als oder gleich einem ersten vorher festgelegten Grenzwert ist oder die Konzentration an Na⁺-Ionen in dem Platinbad (B) größer als oder gleich einem zweiten vorher festgelegten Grenzwert ist.

2. Verfahren nach Anspruch 1, wobei die Filtriervorrichtung (1) ferner einen Filtrierstrom (20a) und einen Elektrodenstrom (30a) aufweist, wobei das aus dem Platinbad (B) entnommene Fluid, der Filtrierstrom (20a) und der Elektrodenstrom (30a) separat in dem Elektrodialysereaktor (R) zirkulieren, wobei der Filtrierschritt durch Elektrodialyse in dem Elektrodialysereaktor (R) durchgeführt wird.

3. Verfahren nach Anspruch 1 oder 2, wobei die Temperatur des Entnahmestroms (10a) in dem Elektrodialysereaktor (R) zwischen 40 und 65 °C liegt, vorzugsweise bei gleich 64 °C.

4. Verfahren nach einem der Ansprüche 1 bis 3, wobei die Konzentration an Cl⁻-Ionen in dem Platinbad (B) ununterbrochen auf einem Wert gehalten wird, der in einem Intervall von 0 bis 200 g/l liegt.

5. Verfahren nach einem der Ansprüche 1 bis 4, wobei die Konzentration an Na⁺-Ionen in dem Platinbad (B) ununterbrochen auf einem Wert gehalten wird, der in einem Intervall von 0 bis 200 g/L liegt.

6. Verfahren nach einem der Ansprüche 1 bis 5, wobei der pH des Platinbads (B) ununterbrochen auf einem Wert gehalten wird, der in einem Intervall von 6,10 bis 6,30 liegt, vorzugsweise bei gleich 6,20.

7. Verfahren nach einem der Ansprüche 1 bis 6, wobei der Filtrierschritt durchgeführt wird, wenn der pH des Platinbads (B) um einen vorher festgelegten Wert steigt.

8. Verfahren nach einem der Ansprüche 1 bis 7, wobei der Filtrierschritt durchgeführt wird, wenn mindestens eine Regeneration des Platinbads (B) durchgeführt wurde.

9. Filtriervorrichtung (1) eines Platinbads durch Elektrodialyse, aufweisend:
- ein Platinbad (B), das Cl⁻-Ionen und Na⁺-Ionen aufweist und Konzentrationsmessmittel (70), die erlauben, ununterbrochen die Konzentration an Ionen Cl⁻-Ionen und an Na⁺-Ionen zu messen, wobei die Filtriervorrichtung (1) ausgelegt ist, um eingesetzt zu werden, wenn die Konzentrationsmessmittel (70) ermitteln, dass die eine oder die andere der Konzentrationen an Cl⁻ oder Na⁺ einen vorher festgelegten Grenzwert überschreitet,
- ein Filtrierbad (D) und ein Elektrodenbad (E);
- einen Elektrodialysereaktor (R), der von einem Entnahmestrom (10a), der aus dem Platinbad (B) hervorgegangen ist, von einem Filtrierstrom (20a), der aus dem Filtrierbad (D) hervorgegangen ist, und einem Elektrodenstrom (30a), der aus dem Elektrodenbad (E) hervorgegangen ist, gespeist wird;
- einen Strom gefilterten Bades (10b), der aus dem Reaktor (R) hervorgegangen ist, der das Platinbad (B) speist.

## Claims

1. Method for filtering a platinum bath by electrodialysis, the platinum bath (B) containing Cl⁻ ions and Na⁺ ions, the method comprising consecutive steps of:
- extracting fluid from the platinum bath (B) by means of an extraction current (10a);
- filtering the fluid extracted during the extraction step, carried out by electrodialysis in a filtering device (1) comprising an electrodialysis reactor (R);
- supplying the platinum bath (B) with the fluid from the filtering step, by means of a filtered bath current (10b);
all of these steps being carried out in a continuous flow, and the filtering step being carried out when the concentration of Cl⁻ ions in the platinum bath (B) is greater than or equal to a first predetermined threshold value, or the concentration of Na⁺ ions in the platinum bath (B) is greater than or equal to a second predetermined threshold value.

2. Method according to claim 1, wherein the filtering device (1) further comprises a filtering current (20a) and an electrode current (30a), the fluid extracted from the platinum bath (B), the filtering current (20a) and the electrode current (30a) flowing separately in the electrodialysis reactor (R), the electrodialysis filtering step being performed in the electrodialysis reactor (R).

3. Method according to claim 1 or 2, wherein the temperature of the extraction current (10a) in the electrodialysis reactor (R) is between 40 and 65°C, preferably 64°C.

4. Method according to any one of claims 1 to 3, wherein the concentration of Cl⁻ ions in the platinum bath (B) is continuously maintained at a value within a range of 0 to 200 g/L.

5. Method according to any one of claims 1 to 4, wherein the concentration of Na⁺ ions in the platinum bath (B) is continuously maintained at a value within a range of 0 to 200 g/L.

6. Method according to any one of claims 1 to 5, wherein the pH of the platinum bath (B) is continuously maintained at a value in the range of 6.10 to 6.30, preferably 6.20.

7. Method according to any one of claims 1 to 6, wherein the filtering step is carried out when the pH of the platinum bath (B) increases by a predetermined value.

8. Method according to any one of claims 1 to 7, wherein the filtering step is carried out when at least one regeneration of the platinum bath (B) has been carried out.

9. Device for filtering (1) a platinum bath by electrodialysis, comprising:
- A platinum bath (B) comprising Cl⁻ ions and Na⁺ ions and concentration measuring means (70) for continuously measuring the concentration of Cl⁻ ions and Na⁺ ions, the device for filtering (1) being configured to be implemented when the concentration measuring means (70) detect that either Cl⁻ or Na⁺ concentration exceeds a predetermined threshold value;
- A filtering bath (D) and an electrode bath (E);
- An electrodialysis reactor (R) fed by an extraction current (10a) from the platinum bath (B), by a filtering current (20a) from the filtering bath (D) and by an electrode current (30a) from the electrode bath (E);
- A filtered bath current (10b) from the reactor (R), which supplies the platinum bath (B).
